# EUROPEAN PATENT APPLICATION

(11) **EP 3 543 750 A1**
(43) Date of publication of application: **25.09.2019**
(21) Application number: 17871809.4
(22) Date of filing: 13.11.2017
(51) Int. Cl.: G02B 5/20, F21S 2/00, F21V 9/00, G02F 1/13357, F21Y 115/10

(54) **QUANTUM DOT-CONTAINING MEMBER, SHEET MEMBER, BACKLIGHT DEVICE AND DISPLAY DEVICE**

(30) Priority: 16.11.2016 JP 2016223205
(71) Applicant: NS Materials Inc., Chikushino City Fukuoka 818-0042 (JP)
(72) Inventor: MIYANAGA, Akiharu, Chikushino-city Fukuoka 818-0042 (JP); ITO, Tetsuji, Chikushino-city Fukuoka 818-0042 (JP)
(74) Representative: SSM Sandmair
(86) International application number: PCT/JP2017/040704
(87) International publication number: WO 2018/092705

(57) **Abstract**

To provide a quantum dot-containing member, a sheet member, a backlight device, and a display device containing quantum dots capable of effectively suppressing a temporal change of a light emission intensity, particularly, without providing a barrier layer, a sheet member (1) containing quantum dots of the invention is a sheet member obtained by dispersing quantum dots in resin, and the resin contains the following general formula (1) and general formula (2). 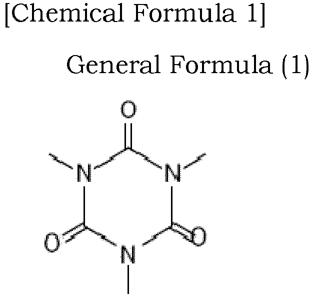 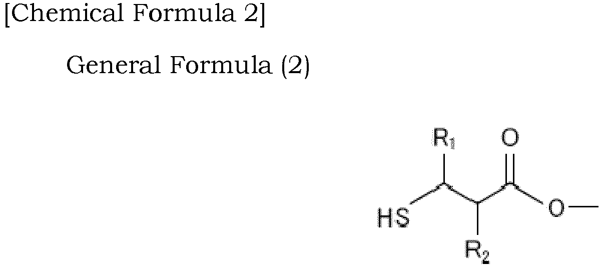 where "Ri" and "R₂" refer to H or CnHm (where "n" and "m" denote integers).

## Description

### TECHNICAL FIELD

The present invention relates to a quantum dot-containing member, a sheet member, a backlight device, and a display device.

### BACKGROUND ART

For example, Patent Document 1 described below discloses an invention regarding a display device using a fluorescent sheet.

Patent Document 1 discloses a display device in which barrier layers are arranged in both sides of the fluorescent sheet.

By providing the barrier layers, it is expected that the fluorescent substance can be protected from a high temperature, moisture, or other harmful environmental conditions.

### [Citation List]

### [Patent Documents]

Patent Document 1: Japanese Unexamined Patent Application Publication No. 2011-13567

### SUMMARY OF INVENTION

However, by providing the barrier layers, the number of parts and the thickness of the sheet member increase.

In view of the aforementioned problem, it is therefore an object of the present invention to provide a quantum dot-containing member, a sheet member, a backlight device, and a display device, capable of effectively suppressing a temporal change of a light emission intensity, particularly, without providing the barrier layer.

A quantum dot-containing member of the present invention is a member obtained by dispersing quantum dots in resin, wherein a barrier layer is not provided on a surface of the member.

In the present invention, it is preferable that the resin contains the following general formula (1) and general formula (2). 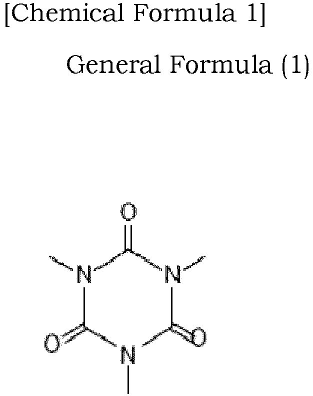 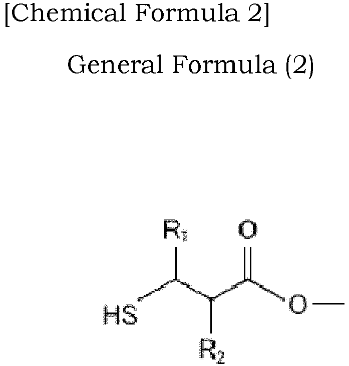 where "R₁" and "R₂" refer to H or CnHm (where "n" and "m" denote integers).

In the present invention, it is preferred that the resin contains at least one or more selected from the following general formula (3), general formula (4), general formula (5), and general formula (6).

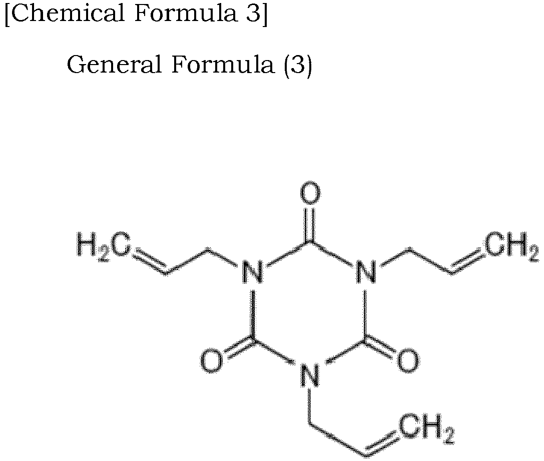

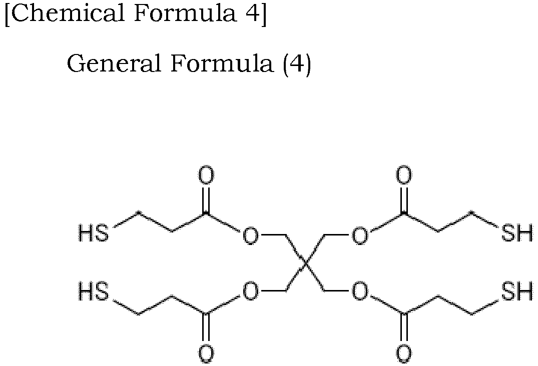

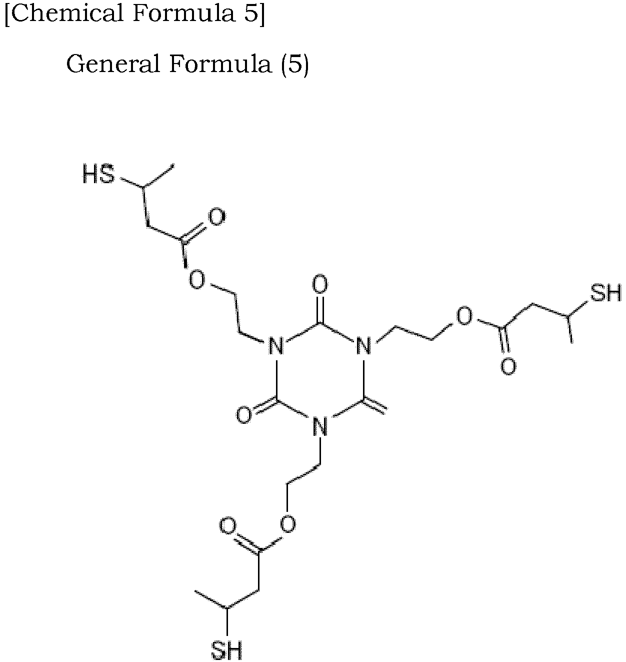

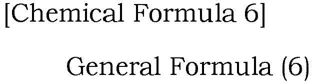

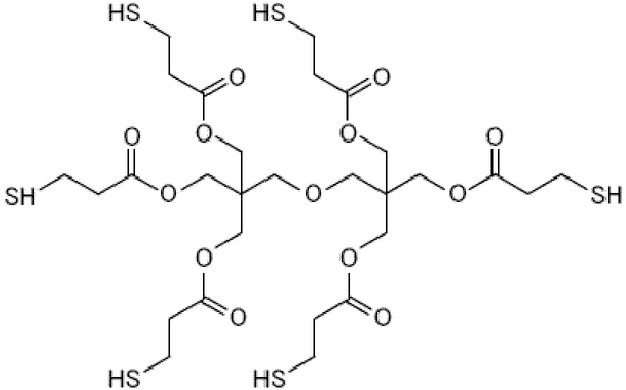

In the present invention, it is preferable that the resin contains the following general formula (7) or general formula (8). 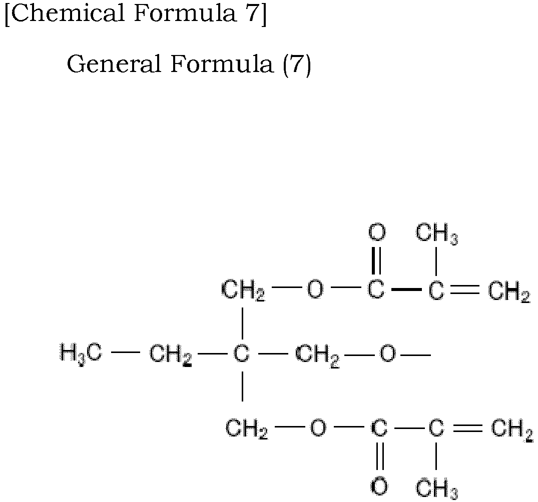 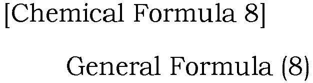 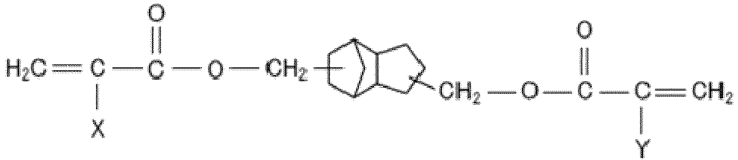 where "X" and "Y" refer to H or CₙHₘ (where "n" and "m" denote integers).

In the present invention, it is preferable that a polymer constituting the resin has a high crosslink density.

In the present invention, it is preferable that a normalized illuminance at 500 hours is 0.6 or higher.

In the present invention, it can be configured that the barrier layer is not provided in any one of a light incidence side and a light emission side of the member.

A sheet member of the present invention includes the quantum dot-containing member described above.

A backlight device of the present invention includes the quantum dot-containing member described above or the sheet member described above.

A display device of the present invention includes the quantum dot-containing member described above or the sheet member described above.

Using the quantum dot-containing member according to the present invention, it is possible to effectively suppress a temporal change of the light emission intensity without providing a barrier layer.

### BRIEF DESCRIPTION OF DRAWINGS

FIG. 1 is a longitudinal cross-sectional view illustrating a sheet member according to a first embodiment of the invention;
FIG. 2A and FIG.2B are a schematic diagram illustrating a quantum dot;
FIG. 3 is a longitudinal cross-sectional view illustrating a sheet member according to a second embodiment of the invention;
FIG. 4 is a longitudinal cross-sectional view illustrating a sheet member according to a third embodiment of the invention;
FIG. 5 is a longitudinal cross-sectional view illustrating a sheet member according to a fourth embodiment of the invention;
FIG. 6 is a perspective view illustrating a sheet member according to an embodiment of the invention;
FIG. 7 is a longitudinal cross-sectional view illustrating a display device using a sheet member according to an embodiment of the invention;
FIG. 8 is a longitudinal cross-sectional view illustrating a display device using a sheet member according to an embodiment of the invention different from that of FIG. 7;
FIG. 9 is a longitudinal cross-sectional view illustrating a light guide member using a sheet member according to an embodiment of the invention;
FIG. 10 is a conceptual diagram illustrating a manufacturing device for manufacturing a sheet member according to an embodiment of the invention;
FIG. 11 is a graph illustrating a relationship between an elapsed time and a green light intensity measured under a durability condition (1) in an example of the invention;
FIG. 12 is a graph illustrating a relationship between an elapsed time and a red light intensity measured under the durability condition (1) in an example of the invention;
FIG. 13 is a graph illustrating a relationship between an elapsed time and a green light intensity measured under a durability condition (2) in an example of the invention;
FIG. 14 is a graph illustrating a relationship between an elapsed time and a red light intensity measured under the durability condition (2) in an example of the invention;
FIG. 15 is a graph illustrating a relationship between an elapsed time and a green light intensity measured under a durability condition (3) in an example of the invention;
FIG. 16 is a graph illustrating a relationship between an elapsed time and a red light intensity measured under the durability condition (3) in an example of the invention;
FIG. 17 is a graph illustrating a relationship between an elapsed time and a blue light intensity measured using a sheet member different from those of FIGS. 11 and 12 in a durability test (1);
FIG. 18 is a graph illustrating a relationship between an elapsed time and a green light intensity measured using a sheet member different from those of FIGS. 11 and 12 in the durability test (1);
FIG. 19 is a graph illustrating a relationship between an elapsed time and a red light intensity measured using a sheet member different from those of FIGS. 11 and 12 in the durability test (1);
FIG. 20 is a graph illustrating a relationship between an elapsed time and a blue light intensity measured using a sheet member different from those of FIGS. 11 and 12 in a durability test (4);
FIG. 21 is a graph illustrating a relationship between an elapsed time and a green light intensity measured using a sheet member different from those of FIGS. 11 and 12 in the durability test (4);
FIG. 22 is a graph illustrating a relationship between an elapsed time and a red light intensity measured using a sheet member different from those of FIGS. 11 and 12 in the durability test (4);
FIG. 23 is a graph illustrating a relationship between an elapsed time and a blue light intensity measured using a sheet member different from those of FIGS. 11 and 12 in a durability test (5);
FIG. 24 is a graph illustrating a relationship between an elapsed time and a green light intensity measured using a sheet member different from those of FIGS. 11 and 12 in the durability test (5);
FIG. 25 is a graph illustrating a relationship between an elapsed time and a red light intensity measured using a sheet member different from those of FIGS. 11 and 12 in the durability test (5); and
FIG. 26 is a graph illustrating a relationship between an elapsed time and a standard illuminance in a comparative example.

### DESCRIPTION OF EMBODIMENTS

An embodiment of the invention (hereinafter, simply referred to as "embodiment") will now be described in details. Note that the invention is not limited to the following embodiments, but various modifications may be possible within a range of the gist.

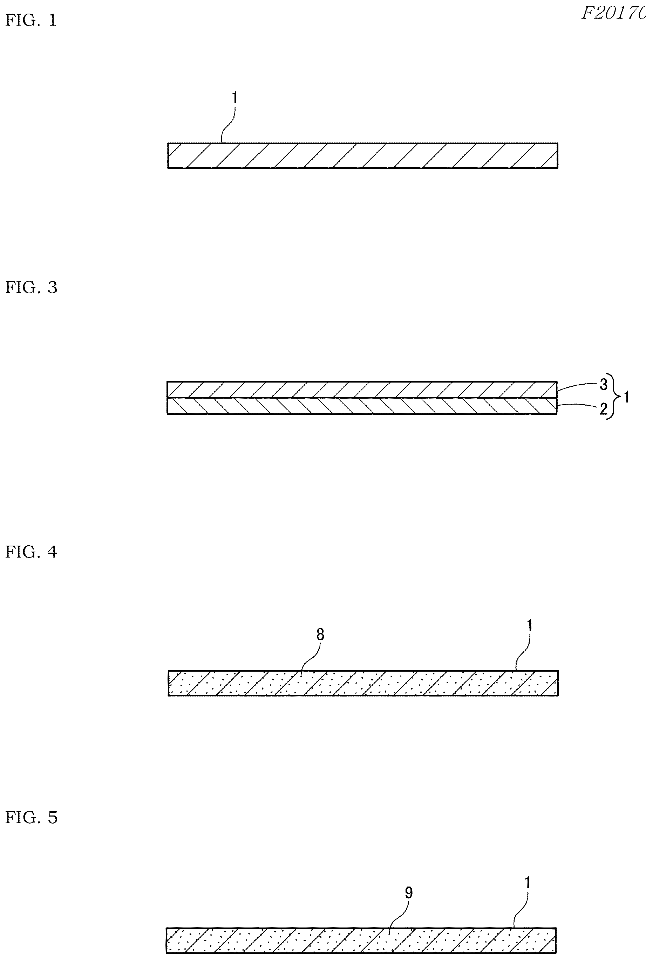

FIG. 1 is a longitudinal cross-sectional view illustrating a sheet member according to a first embodiment of the invention. As illustrated in FIG. 1, the sheet member 1 is a sheet product in which quantum dots are dispersed by resin, and a barrier layer is not provided in both sides or a single side of the sheet member 1, in other words, in a light incident side or a light emitting side.

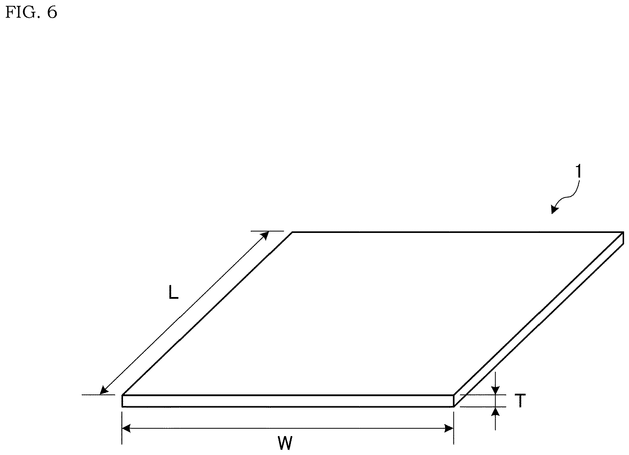

As illustrated in FIG. 6, the sheet member 1 is formed in a thin plate shape, and in general, the "sheet" is configured to have a thickness smaller than its length and width. Although the sheet member 1 may be flexible or not, the sheet member 1 is preferably flexible. The sheet member 1 may be simply referred to as "sheet", "film", "film sheet", or the like in some cases. However, herein, the "film" is defined as a flexible sheet product. In addition, even when the sheet member 1 is formed to have a constant thickness, the thickness may be deformed depending on place, or may be gradually changed in a length or width direction or in a stepwise manner. The length L, width W, and thickness T of the sheet member 1 are not limited, and the dimensions are variously changed in a product. For example, the sheet member 1 may be used as a backlight for a large-sized product such as a television set, or may be used as a backlight of a small-sized portable device such as a smart phone in some cases, so that the size is determined depending on a product.

Although a large number of quantum dots are contained in the sheet member 1, a fluorescent pigment, a fluorescent dye, or the like may also be contained in addition to the quantum dots. For example, a mixture of red quantum dots and typical green fluorescent substances (such as YAG or Sialon) may be used.

The quantum dots are nano particles having a particle size of approximately several nanometers to several tens of nanometers.

For example, the quantum dots are formed of CdS, CdSe, ZnS, ZnSe, ZnSeS, ZnTe, ZnTeS, or the like. The quantum dots preferably do not contain Cd nor P. Use of cadmium Cd is regulated in each country due to its toxicity. In addition, since organic phosphorus compounds are expensive and are easily oxidized in the air, and its synthesis becomes unstable, this easily increases cost, destabilizes its fluorescent characteristics, and makes its manufacturing process cumbersome.

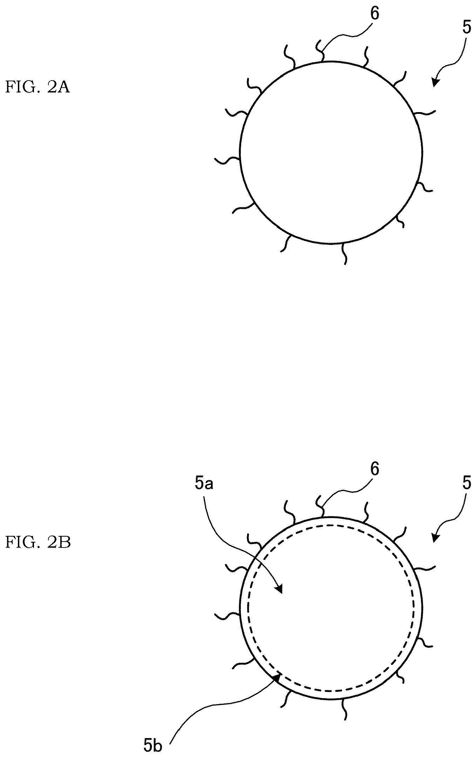

As illustrated in FIG. 2A, preferably, a plurality of organic ligands 6 are coordinated on the surface of the quantum dot 5. As a result, it is possible to suppress aggregation of the quantum dots 5 to exhibit a desired optical property. Although a ligand usable in the reaction is not particularly limited, for example, the following ligands may be representatively employed.

Aliphatic primary amines or oleylamine: C₁₈H₃₅NH₂, stearoyl(octadecyl)amine: C₁₈H₃₇NH₂, dodecyl(lauryl)amine: C₁₂H₂₅NH₂, decylamine: C₁₀H₂₁NH₂, or octylamine: C₈H₁₇NH₂
Fatty acid or oleic acid: C₁₇H₃₃COOH, stearic acid: C₁₇H₃₅COOH, palmitic acid: C₁₅H₃₁COOH, myristic acid: C₁₃H₂₇COOH, lauryl (dodecane) acid: C₁₁H₂₃COOH, decanoic acid: C₉H₁₉COOH, or octanoic acid: C₇H₁₅COOH
Thiols or octadecanethiol: C₁₈H₃₇SH, hexanedecanethiol: C₁₆H₃₃SH, tetradecanethiol: C₁₄H₂₉SH, dodecanethiol: C₁₂H₂₅SH, decanethiol: C₁₀H₂₁SH, octanethiol: C₈H₁₇SH
Phosphines or trioctylphosphine: (C₈H₁₇)₃P, triphenyphosphine: (C₆H₅)₃P, or tributylphosphine: (C₄H₉)₃P
Phosphine oxides or trioctylphosphine oxide: (C₈H₁₇)₃P=O, triphenylphosphine oxide: (C₆H₅)₃P=O, or tributylphosphine oxide: (C₄H₉)₃P=O

The quantum dot 5 illustrated in FIG. 2B has a core shell structure having a core 5a and a shell 5b coated on a surface of the core 5a. As illustrated in FIG. 2B, a plurality of organic ligands 6 are preferably coordinated on a surface of the quantum dot 5. The core 5a of the quantum dot 5 of FIG. 2B is the nano particle of FIG. 2A. Therefore, the core 5a is formed of, for example, the material described above. Although the material of the shell 5b is not particularly limited, for example, the shell 5b is formed of zinc sulfide (ZnS) or the like. Similar to the core 5a, the shell 5b preferably does not contain cadmium (Cd).

Note that the shell 5b may be solubilized on the surface of the core 5a. Although a boundary between the core 5a and the shell 5b is indicated by the dotted line in FIG. 2B, this means that it does not matter whether the boundary between the core 5a and the shell 5b can be recognized by analysis or not.

The quantum dots include quantum dots having fluorescence wavelengths of approximately 520 nm (green) and approximately 660 nm (red). For this reason, as blue light is incident from the light incidence surface, a part of the blue color is converted into a green or red color by the quantum dot. As a result, white light can be obtained from the light emission surface.

The sheet member 1 of FIG. 1 has a single layer structure and is formed in a sheet shape. Meanwhile, for example, as illustrated in FIG. 3, the sheet member 1 may be a sheet-like product having a quantum dot layer 3 formed on at least one side of the base film 2.

In the configuration of FIG. 3, the quantum dot layer 2 may be formed on the surface of the base film 2, for example, by coating. Although not particularly limited, the base film 2 is preferably a polyethylene terephthalate (PET) film from the viewpoint of light transmittance, treatability (handlability), and adherence to the quantum dot layer 3.

According to this embodiment, the resin for dispersing the quantum dots is characterized by containing the following general formula (1) and general formula (2). 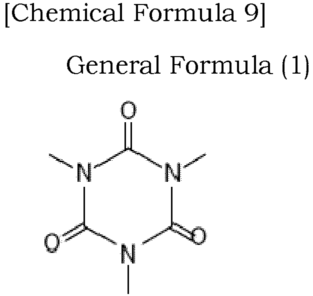 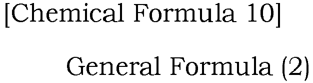 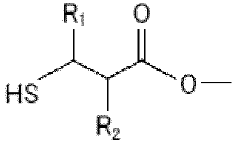 where "R₁" and "R₂" refer to H or CnHm (where "n" and "m" denote integers).

The general formula (1) expresses an isocyanurate compound. In addition, the general formula (2) is positioned in a terminal ligand of a resin polymer.

According to this embodiment, the isocyanurate compound expressed in the general formula (1) and the resin monomer containing the terminal ligand expressed in the general formula (2) are preferably mixed. The isocyanurate compound is a main material for improving durability, and the resin monomer containing the terminal ligand expressed in the general formula (2) acts as a crosslinking agent, so that it is possible to obtain excellent durability while maintaining the high light emission intensity without coating the sheet member 1 with the barrier layer unlike the prior art.

According to this embodiment, the resin for dispersing the quantum dots may include the following resins.

That is, the resin preferably includes at least one or more selected from the following general formula (3), general formula (4), general formula (5), and general formula (6).

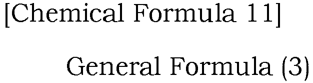

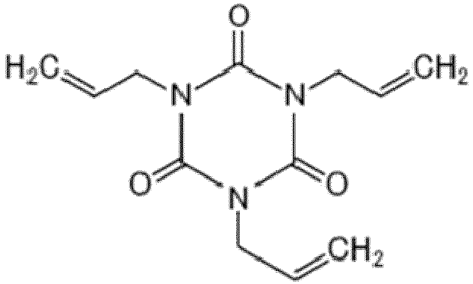

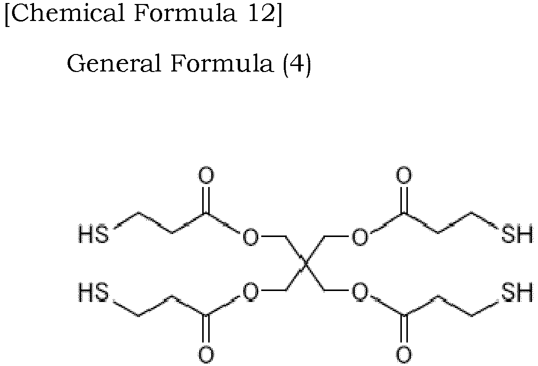

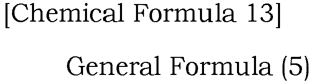

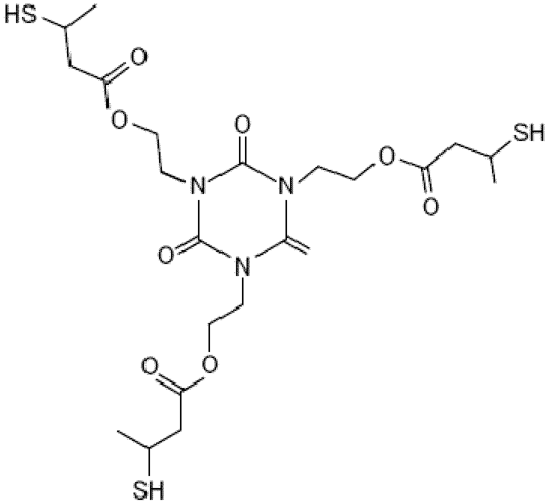

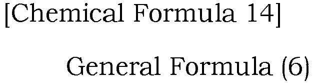

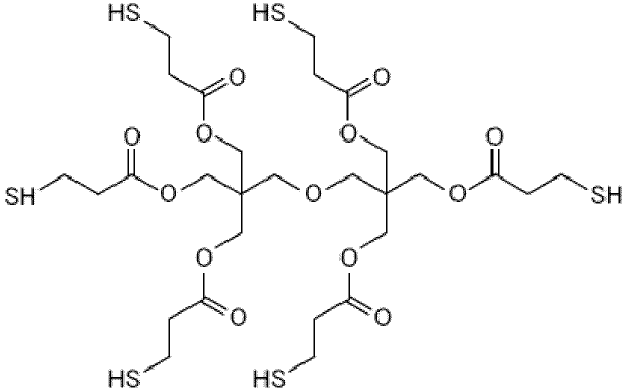

According to this embodiment, at least one element selected from a group consisting of a resin compound obtained by combining the general formula (3) and the general formula (4), a resin compound obtained by combining the general formula (3) and the general formula (5), a resin compound obtained by combining the general formula (3) and the general formula (6) is preferably selected. Note that the general formula (3) may be mixed with at least two elements selected from the general formula (4), the general formula (5), and the general formula (6).

The general formula (3) is triallylisocyanurate, the general formula (4) is pentaerythritol tetrakis (3-mercaptopropionate), the general formula (5) is (1,3,5-tris(3-mercaptobutyloxyethyl)-1,3,5-triazine-2,4,6 (1H, 3H, 5H-trione), and the general formula (6) is dipentaerythritol hexakis(3-mercaptopropionate).

As described in the following experiment, using the sheet member 1 according to this embodiment, it is possible to obtain a normalized illuminance of 0.6 or higher at 500 hours. Preferably, it is possible to obtain a normalized illuminance of 0.7 or higher, and more preferably, a normalized illuminance of 0.8 or higher. In addition, it is possible to obtain a transmittance of the sheet member 1 of 90% or higher. Furthermore, it is possible to obtain a coverage ratio of BT.2020 (color gamut) of 90% or higher, and more preferably, 95% or higher.

Alternatively, according to this embodiment, the resin preferably contains the following general formula (7) or (8). 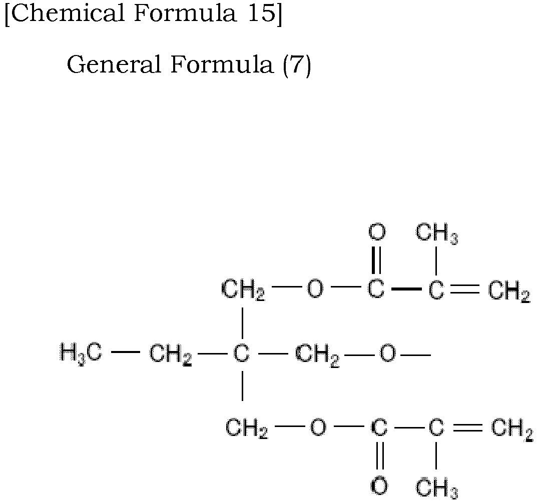 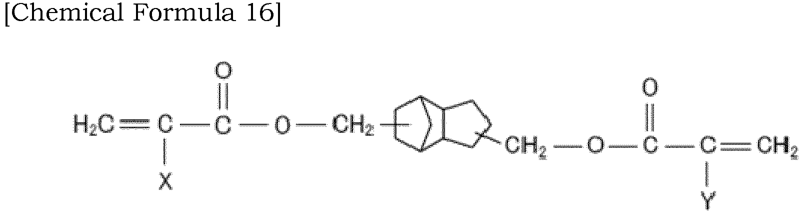 where "X" and "Y" refer to H or CnHm (where "n" and "m" denote integers).

According to this embodiment, the resin used in the sheet member 1 may additionally include polypropylene, polyethylene, polystyrene, AS resin, ABS resin, acrylic resin, methacrylic resin, polyvinyl chloride, polyacetal, polyamide, polycarbonate, modified polyphenylene ether, polybutylene terephthalate, polyethylene terlene terephthalate, polysulfone, polyether sulfone, polyphenylene sulfide, polyamide imide, polymethyl pentene, liquid crystal polymer, epoxy resin, phenol resin, urea resin, melamine resin, epoxy resin, diallyl phthalate resin, unsaturated polyester resin, polyimide, polyurethane, silicone resin, styrenic thermoplastic elastomer, a mixture of some of them, or the like.

According to this embodiment, as illustrated in FIG. 4, a light scattering agent 8 may be contained in the sheet member 1. In the configuration of FIG. 3, the quantum dot layer 3 contains the light scattering agent 8. A material of the light scattering agent 8 is not particularly limited, and may include minute particles of SiO₂, BN, AlN, or the like. For example, the light scattering agent 8 is contained as much as 1 to 10 wt% in the sheet member 1 or the quantum dot layer 3.

According to another embodiment of FIG. 5, the sheet member 1 contains a thickener 9. In the configuration of FIG. 3, the quantum dot layer 3 contains the thickener 9. A material of the thickener 9 is not particularly limited, and may include a carboxyvinyl polymer, carboxymethylcellulose, acrylic acid methyl ester copolymer, bentonite (aluminum silicate), a hectorite (magnesium silicate)-based additive, or the like. Since the thickener 9 is contained, resin compositions constituting the sheet member 1 and the quantum dot layer 3 can be adjusted to a suitable viscosity, and the sheet member 1 and the quantum dot layer 3 can be easily formed in a predetermined thickness and a predetermined shape.

According to this embodiment, in order to improve dispersibility of the quantum dots contained in the sheet member 1, the sheet member 1 preferably contains a dispersant. A material of the dispersant is not particularly limited, and may include epoxy resins, polyurethanes, polycarboxylates, formalin condensation polymers of naphthalene sulfonates, polyethylene glycols, partially alkyl ester compounds of polycarboxylic acids, polyethers, polyalkylene polyamine, alkyl sulfonates, quaternary ammonium salts, higher alcohol alkylene oxides, polyhydric alcohol esters, alkyl polyamines, a polyphosphate dispersant, or the like. Specifically, DISPERBYK (registered trademark) produced by "BYK Japan KK" may be employed by way of example.

In this embodiment, a protection layer having excellent water resistance may be provided at the end (edge) of the sheet member 1 containing the quantum dots. By covering the end of the sheet member 1 with the protection layer, it is possible to effectively suppress degradation of the sheet member 1. Meanwhile, using the sheet member 1 containing the quantum dots according to this embodiment, it is possible to suppress degradation of the quantum dots, compared to the prior art, even when the end surface of the sheet member 1 is exposed without providing the protection layer. According to this embodiment, degradation can be suppressed because the polymer has a high crosslink density or the like.

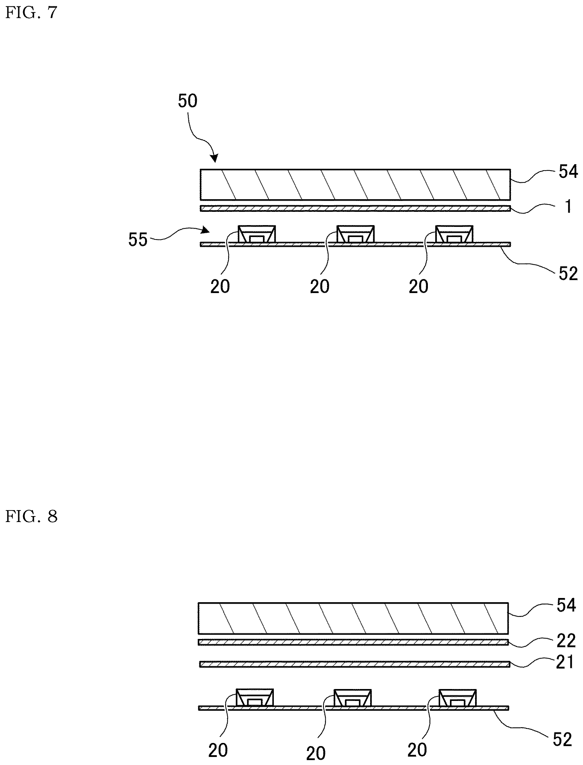

The sheet member 1 containing the quantum dots according to this embodiment may be incorporated into, for example, a backlight device 55 of FIG. 7. In FIG. 7, the backlight device 55 has a plurality of light-emitting elements 20 (LEDs) and the sheet member 1 according to this embodiment facing the light-emitting elements 20. As illustrated in FIG. 7, each light-emitting element 20 is supported by a surface of a support body 52. In FIG. 7, the backlight device 55 is arranged on the back side of the display unit 54 such as a liquid crystal display to provide the display device 50.

Although not shown in FIG. 7, in addition to the sheet member 1, a diffuser for diffusing light or other sheets may also be interposed between the light-emitting element 20 and the display unit 54.

Although the sheet member 1 containing the quantum dots of FIG. 7 is formed as a single sheet, for example, a plurality of sheet members 1 may be joined to provide a predetermined size. Hereinafter, a configuration obtained by joining a plurality of sheet members 1 together by tiling will be referred to as a "composite sheet member".

Here, a configuration having the light-emitting element 20, the diffuser, the composite sheet member, and the display unit 54 stacked in this order obtained by disposing the composite sheet member instead of the sheet member 1 of the display device 50 of FIG. 7 and interposing the diffuser between the light-emitting element 20 and the composite sheet member will be described. In this configuration, the light emitted from the light-emitting element 20 and diffused by the diffuser is incident to the composite sheet member. Since the light diffused by the diffuser is incident to the composite sheet member, a light intensity distribution is suppressed depending on a distance of the light-emitting element 20. In addition, compared to a case where no diffuser is provided, a distance between the light-emitting element 20 and the composite sheet member becomes far, so that the heat radiated from the light-emitting element 20 less affects the quantum dots contained in the composite sheet.

In comparison, as illustrated in FIG. 8, the light-emitting element 20, the composite sheet member 21, the diffuser 22, and the display unit 54 may be arranged in this order. As a result, even when irregularity of the luminescent color occurs due to irregular reflection at the joint of each sheet member 1 or degradation of the quantum dots caused by water vapor entering from the joint or the like, it is possible to suitably suppress color irregularity in the display of the display unit 54. That is, since the light emitted from the composite sheet member 21 is diffused by the diffuser 22 and then enters the display unit 54, it is possible to suppress color irregularity in the display of the display unit 54.

When the composite sheet member 21 is employed, it is preferable to arrange the diffuser in the light emission surface side of the composite sheet member 21 regardless of the display device of FIG. 8.

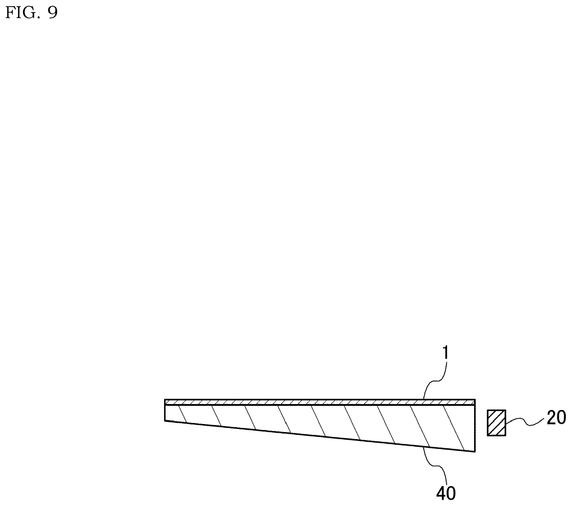

Alternatively, as illustrated in FIG. 9, the sheet member 1 according to this embodiment may be provided on the surface of the light guide panel 40 to constitute a light guide member. As illustrated in FIG. 9, the light-emitting element 20 (LED) is arranged on the side face of the light guide panel 40. In addition, the use of the sheet member 1 according to this embodiment is not limited to those of FIGS. 7, 8, and 9.

According to this embodiment, it is possible to effectively suppress a temporal change of the light emission intensity of the sheet member 1, compared to the prior art. Therefore, it is possible to stabilize a wavelength conversion characteristic by using the sheet member 1 according to this embodiment in the backlight device 5, the light guide member, or the like and to extend a service lifetime of the backlight device 55 or the light guide member.

The sheet member 1 according to this embodiment may be formed flexible. Therefore, it is possible to suitably install the sheet member 1 on a curved surface or the like.

Note that the sheet member 1 according to this embodiment may also be applicable to an illumination device, a light source device, a light diffusion device, a light reflection device, or the like, in addition to the backlight device or the light guide member described above.

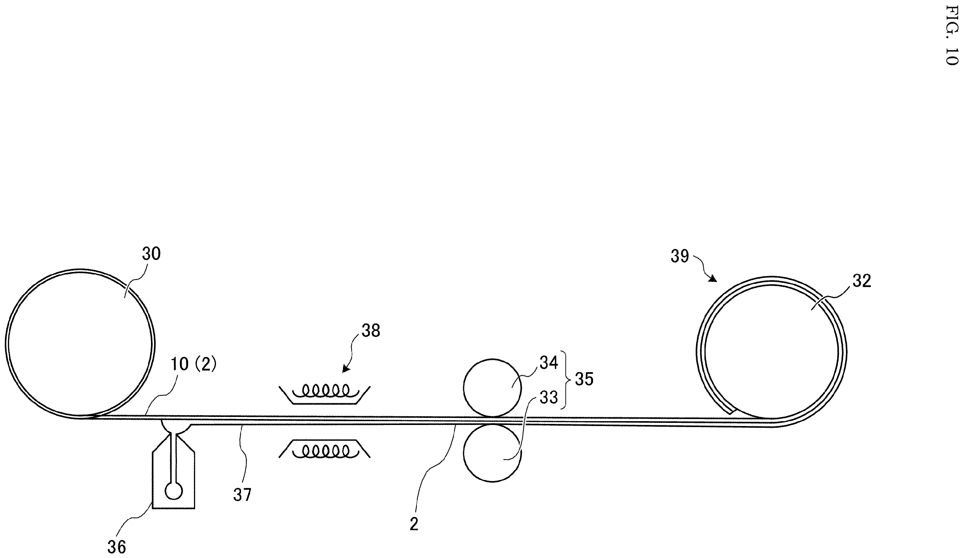

FIG. 10 is a conceptual diagram illustrating a manufacturing apparatus for manufacturing the sheet member according to this embodiment. FIG. 10 shows an exemplary method of manufacturing the sheet member 1 obtained by coating the quantum dot layer 3 on the base film 3 as illustrated in FIG. 3.

As illustrated in FIG. 10, the manufacturing apparatus includes a first original roll 30 for feeding a resin film 10 serving as the base film 2, a winding roll 32, a pressed bonding unit 35 having a pair of nip rolls 33 and 34, a coating means 36, and a heating unit 38.

As illustrated in FIG. 10, the resin film 10 is fed from the first original roll 30, and a resin composition 37 containing quantum dots is coated on the surface of the resin film 10 using the coating means 36. As a method of coating the resin composition 37, a coating method using a coater known in the art such as an impregnation coater may be employed. For example, a gravure coater, a dip coater, a comma knife coater, or the like may be employed.

As illustrated in FIG. 10, the resin film 10 coated on the surface of the resin composition 37 is heated by the heating unit 38 having a heater or the like. As a result, a solvent contained in the resin composition 37 is evaporated, so that the quantum dot layer 2 is solidified to some extent at this point. Alternatively, the quantum dot layer 2 may be cured with ultraviolet rays.

An interface between the quantum dot layer 2 and the resin film 10 is fixed by thermocompression bonding of the pressed bonding unit 35.

The sheet member 39 having the resin film 10 and the quantum dot layer 2 is wound around the winding roll 32. The sheet member 1 of FIG. 3 can be obtained by cutting the wound sheet member 39 in a predetermined size.

In the manufacturing method described above, the quantum dot layer 2 is formed by coating on the surface of the resin film 10, and the thickness of the quantum dot layer 2 can be set to approximately 10 to 500 µm. In addition, the resin film 10 has a thickness of approximately several tens to 1000 µm, and accordingly, the sheet member 1 has a thickness of approximately 100 to 2500 µm. However, the thicknesses of the quantum dot layer 2 and the sheet member 1 are not particularly limited. According to this embodiment, the quantum dot layer 2 of FIG. 3 can be formed into a film in a single layer without using a base film. That is, the sheet member 1 of FIG. 1 is formed in a sheet shape, and the sheet member 1 of FIG. 1 can be thinner than the sheet member 1 of FIG. 2. In this case, the sheet member 1 can be manufactured using methods such as injection molding, extrusion molding, hollow molding, thermoforming, compression molding, calendar molding, an inflation method, and a casting method.

Note that the quantum dot layer 3 of FIG. 3 may be molded in advance, and the base film 2 may be bonded on at least one side of the molded product of the quantum dot layer 3. In this case, the base resin film 2 may be bonded to the molded product of the quantum dot layer 3 by thermocompression bonding or the like. Note that an adhesion layer may also be provided between the quantum dot layer 3 and the base film 2.

Although a sheet member has been exemplified as the quantum dot-containing member in the aforementioned embodiment, the invention is not limited thereto. For example, the invention may include, for example, a stick-shaped object obtained by filling the quantum dot-containing member according to this embodiment in a glass capillary or inserting a molded product, a form obtained by covering the quantum dot-containing member according to this embodiment on an LED surface by potting or the like, a member having a quantum dot layer formed by an inkjet method, or the like.

### Examples

Examples and comparative examples performed to clarify the effects of the present invention will now be described in details. Note that the present invention is not limited by the following examples.

In an experiment, a QD ink (resin composition) was obtained by dispersing quantum dots having a fluorescence wavelength of approximately 520 nm (green) (also referred to as "green quantum dots") and quantum dots having a fluorescence wavelength of approximately 660 nm (red) (also referred to as "red quantum dots").

### (Example 1)

Elements expressed by the general formula (3) and the general formula (4) were contained as the resin of the QD ink, and further, DDT/BYK110 and ZnO (0.75%) were added. In addition, the QD ink was coated on a PET film (having a thickness of 50 µm) to obtain a sheet member. In this case, the quantum dot layer was obtained by curing the QD ink with ultraviolet rays. This similarly apples to the following examples.

### (Example 2)

Elements expressed by the general formula (3) and the general formula (5) were contained as the resin of the QD ink, and further, DDT/BYK110 and ZnO (0.75%) were added. In addition, the QD ink was coated on a PET film (having a thickness of 50 µm) to obtain a sheet member.

### (Example 3)

Elements expressed by the general formula (3) and the general formula (6) were contained as the resin of the QD ink, and further, DDT/BYK110 and ZnO (0.75%) were added. In addition, the QD ink was coated on a PET film (having a thickness of 50 µm) to obtain a sheet member.

The following durability tests were performed for the sheet members of Examples 1 to 3 described above.

### Durability Conditions:

(1) LED is turned on at a temperature of 60°C and a relative humidity of 90RH%;
(2) LED is not turned on at a temperature of 65°C and a relative humidity of 95RH% (dark place); and
(3) LED is not turned on at a temperature of 85°C (dark place).

A relationship between the elapsed time and the light emission intensity was measured on the basis of each of the durability conditions described above. The light emission intensity was measured as a total luminous flux using a total luminous flux measurement system produced by "Otsuka Electronics Co., Ltd." by causing each sample to emit light with a blue LED excitation light (having a wavelength of 450 nm).

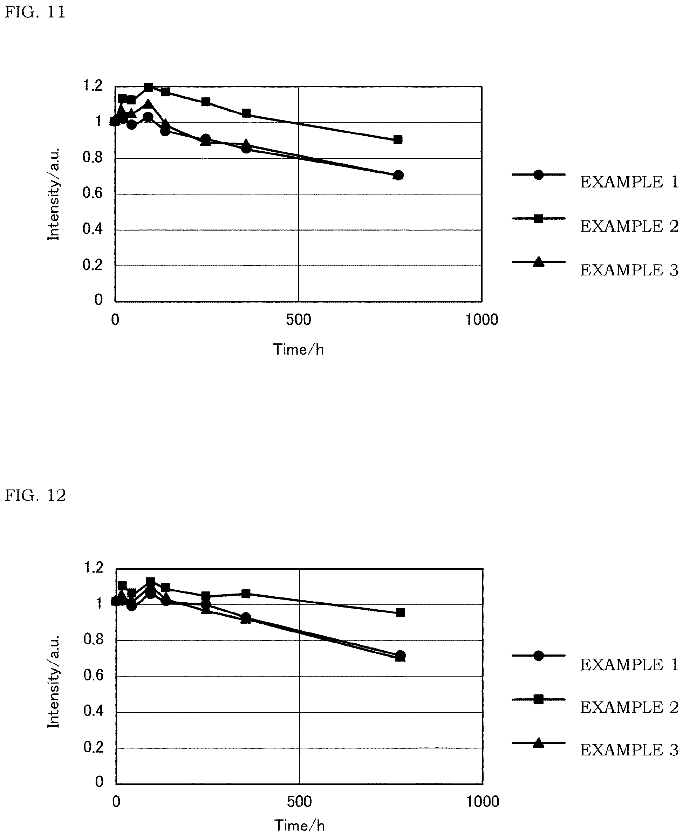

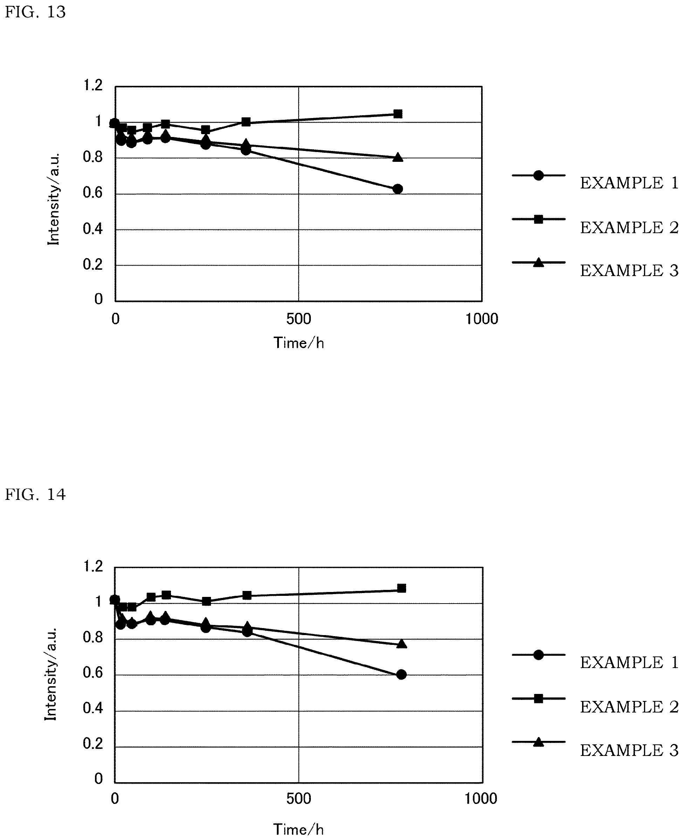

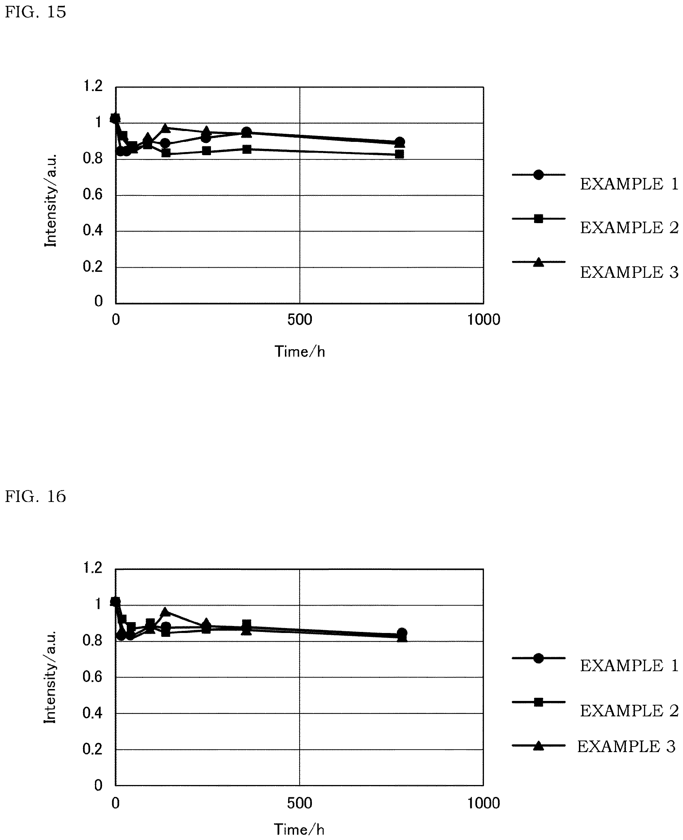

FIG. 11 is a graph illustrating a relationship between an elapsed time and a green light intensity measured under a durability condition (1) in an example of the invention. FIG. 12 is a graph illustrating a relationship between an elapsed time and a red light intensity measured under the durability condition (1) in an example of the invention. FIG. 13 is a graph illustrating a relationship between an elapsed time and a green light intensity measured under a durability condition (2) in an example of the invention. FIG. 14 is a graph illustrating a relationship between an elapsed time and a red light intensity measured under the durability condition (2) in an example of the invention. FIG. 15 is a graph illustrating a relationship between an elapsed time and a green light intensity measured under a durability condition (3) in an example of the invention. FIG. 16 is a graph illustrating a relationship between an elapsed time and a red light intensity measured under the durability condition (3) in an example of the invention.

As illustrated in each graph, it was recognized that temporal changes in both the green light intensity and the red light intensity can be effectively suppressed.

In any experiment, it was recognized that a normalized illuminance at 500 hours is 0.6 or higher. Preferably, the normalized illuminance is 0.7 or higher, and more preferably, 0.8 or higher. In addition, the "normalized illuminance" is a ratio of the light emission intensity normalized by setting the light emission intensity at zero hour (immediately after a start of the durability test) to "1".

As illustrated in each graph, it was recognized that a temporal change of the light emission intensity can be suppressed to be small in Example 2, compared to Example 1 or 3.

Then, a sheet member was obtained by coating resin of the QD ink having the following chemical formula on the PET film.

### (Example 4)

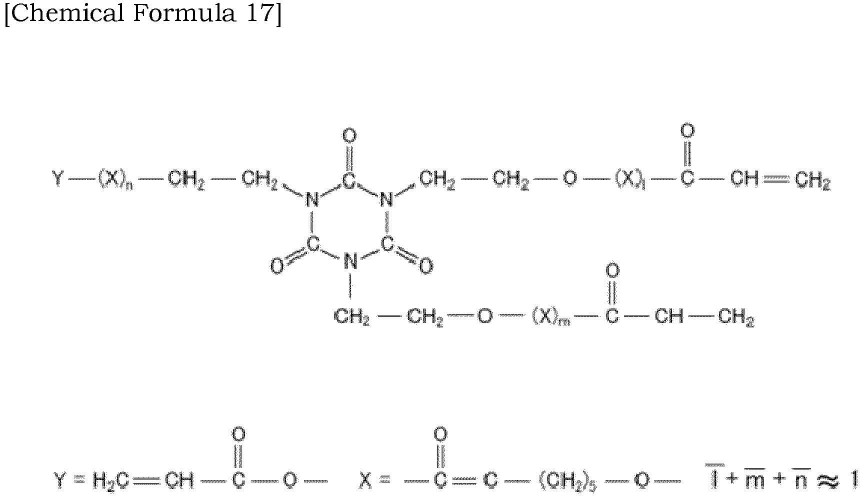

### (Example 5)

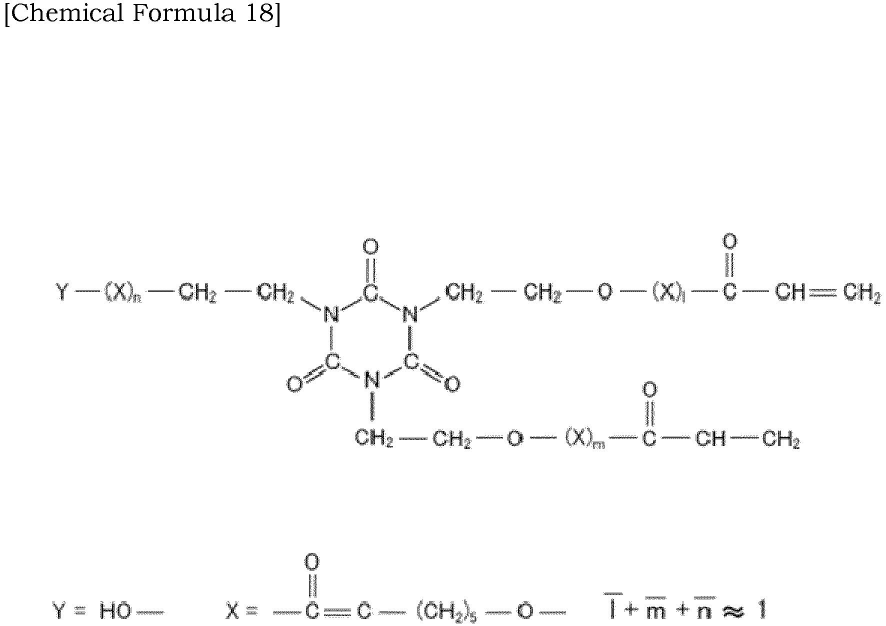

### (Example 6)

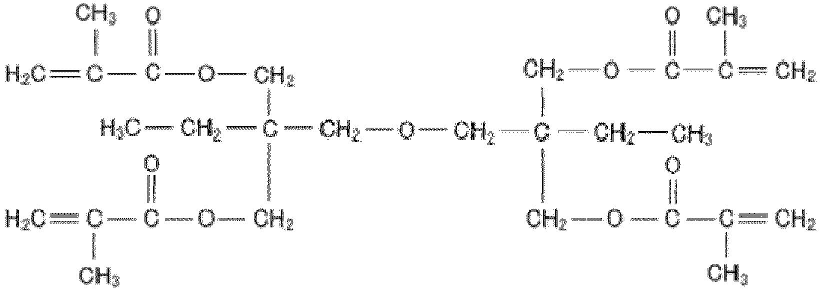

### (Example 7)

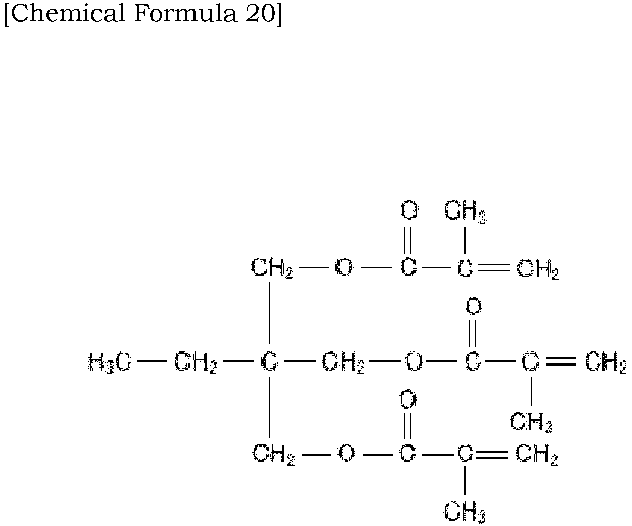

### (Example 8)

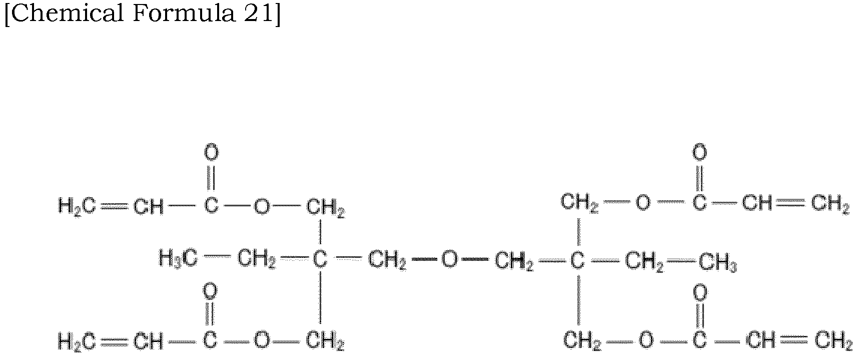

### (Example 9)

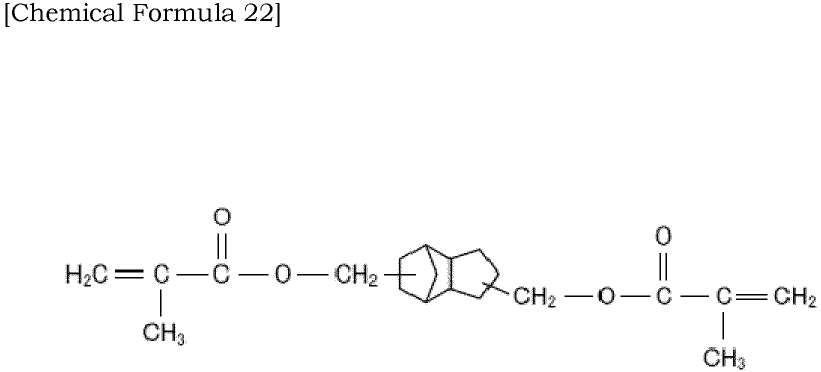

### (Example 10)

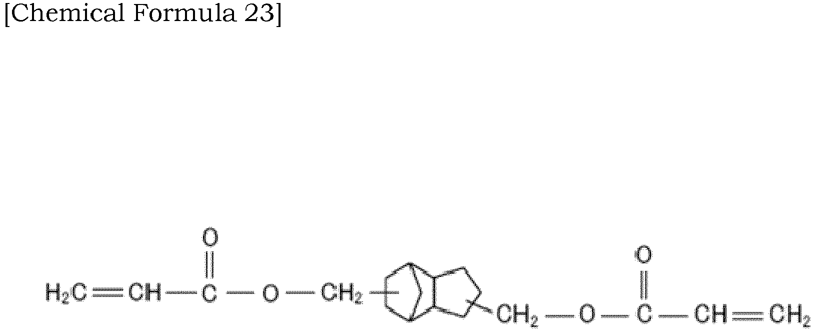

### (Example 11)

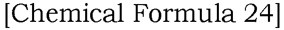

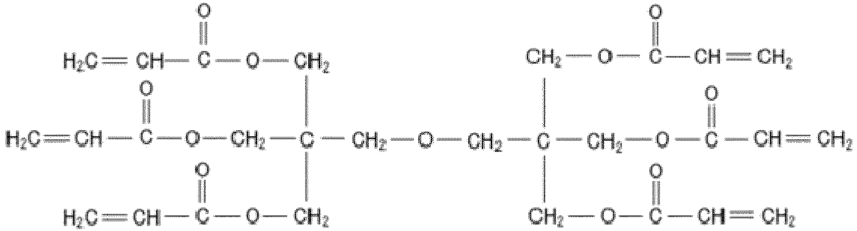

### (Example 12)

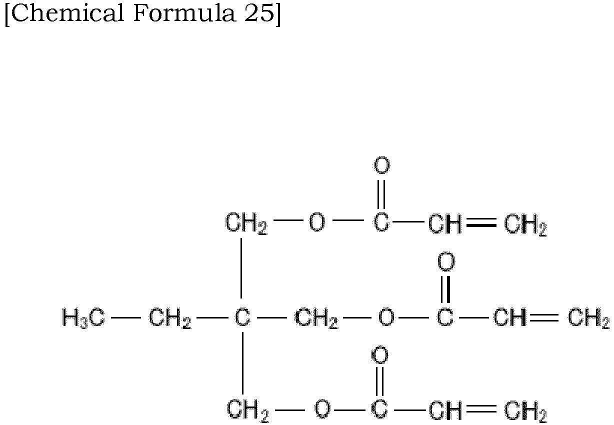

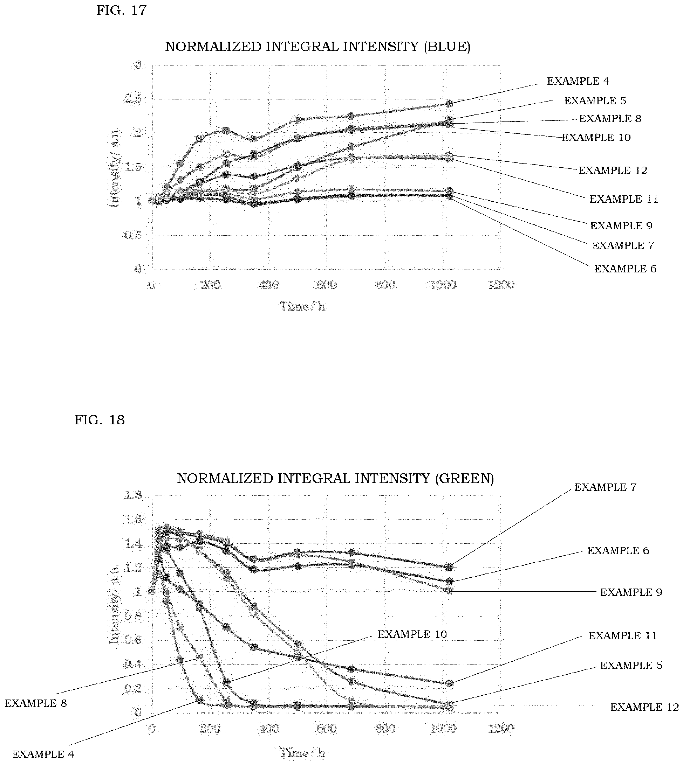

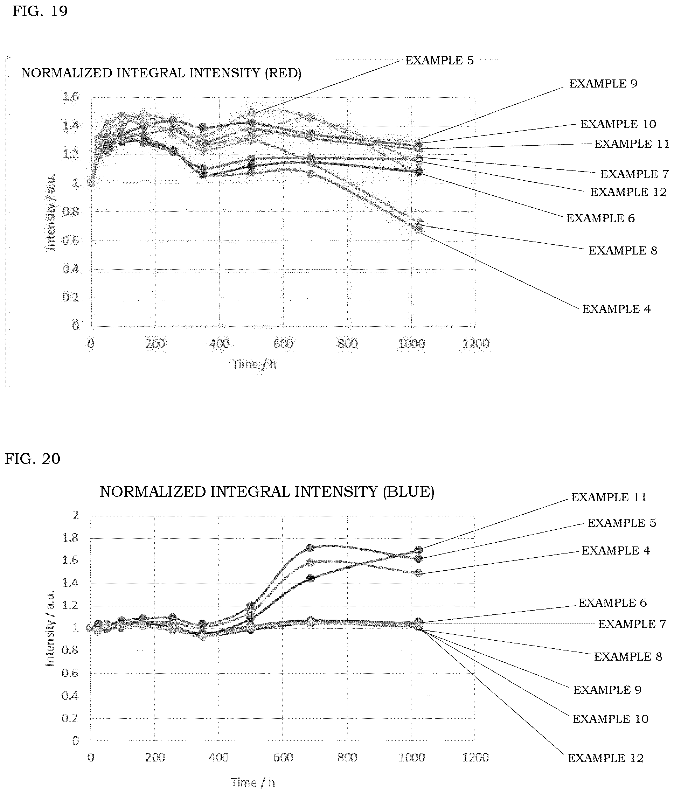

FIG. 17 is a graph illustrating a relationship between an elapsed time and a blue light intensity measured using the sheet members of Examples 4 to 12 in the durability test (1) (LED is turned on at a temperature of 60°C and a relative humidity of 90RH%). FIG. 18 is a graph illustrating a relationship between an elapsed time and a green light intensity measured using the sheet members of Examples 4 to 12 in the durability test (1). FIG. 19 is a graph illustrating a relationship between an elapsed time and a red light intensity measured using the sheet members of Examples 4 to 12 in the durability test (1).

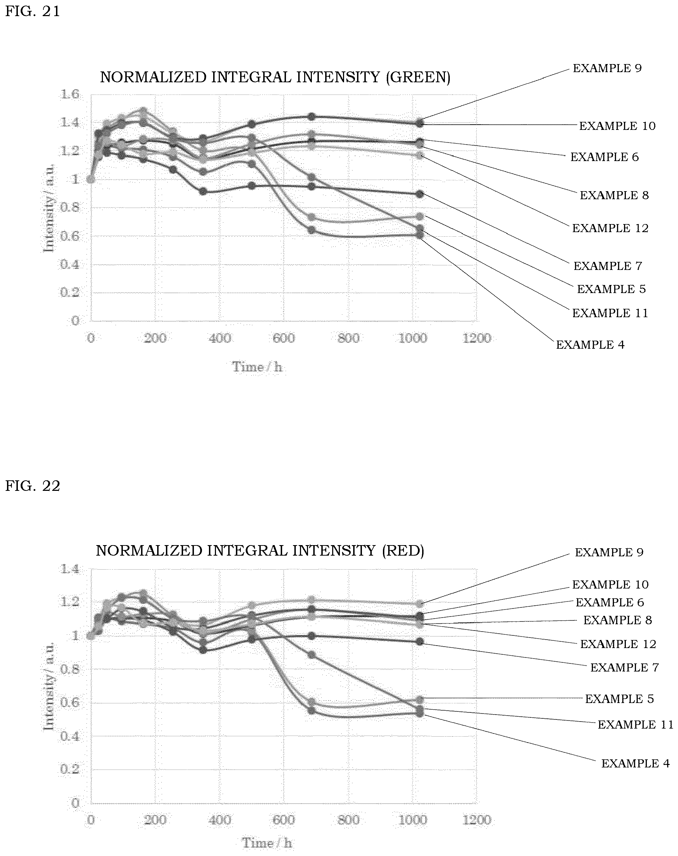

FIG. 20 is a graph illustrating a relationship between an elapsed time and a blue light intensity measured using the sheet members of Examples 4 to 12 in a durability test (4) (LED is not turned on at a temperature of 65°C and a relative humidity of 50RH% (dark place)). FIG. 21 is a graph illustrating a relationship between an elapsed time and a green light intensity measured using the sheet members of Examples 4 to 12 in the durability test (4). FIG. 22 is a graph illustrating a relationship between an elapsed time and a red light intensity measured using the sheet members of Examples 4 to 12 in the durability test (4).

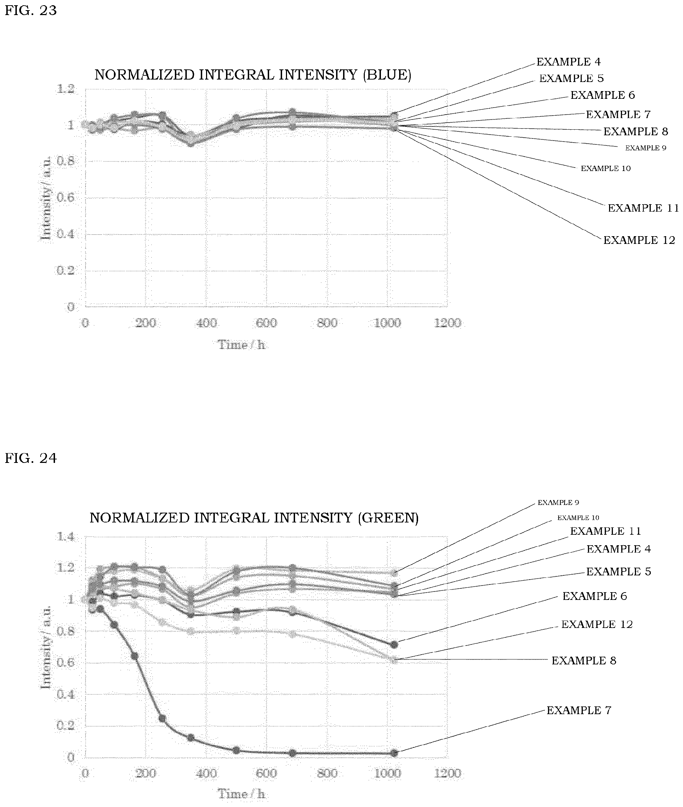

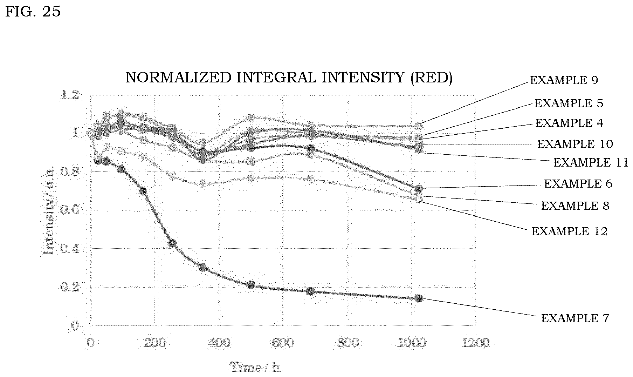

FIG. 23 is a graph illustrating a relationship between an elapsed time and a blue light intensity measured using the sheet members of Examples 4 to 12 in a durability test (5) (LED is not turned on at a temperature of 85°C (dark place)). FIG. 24 is a graph illustrating a relationship between an elapsed time and a green light intensity measured using the sheet members of Examples 4 to 12 in the durability test (5). FIG. 25 is a graph illustrating a relationship between an elapsed time and a red light intensity measured using the sheet members of Examples 4 to 12.

As shown in the results of each experiment, it is recognized that the normalized illuminance at 500 hours can be 0.6 or higher in many examples. Note that the "normalized illuminance" is a light emission intensity ratio normalized by setting the light emission intensity at zero hour (immediately after a start of the durability test) to "1".

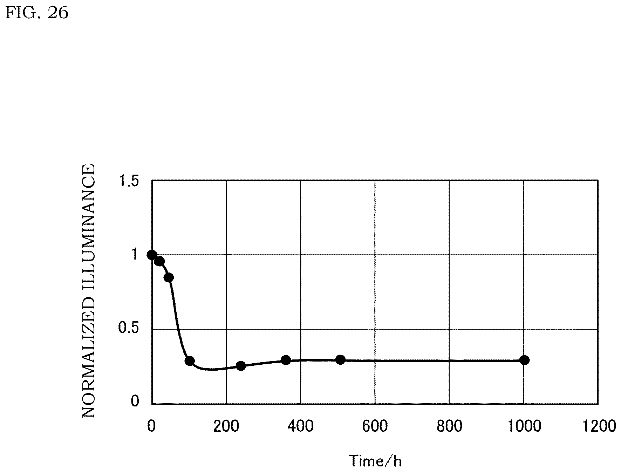

Subsequently, as a comparative example, a quantum dot layer was formed on the PET film by mixing quantum dots with an existing resin material, and a relationship between the elapsed time and the green light intensity was measured under the durability condition (1) described above. Note that the water vapor permeability of the sheet member in the comparative example was approximately 9 (g/m²·day). In the comparative example, as illustrated in FIG. 26, it was recognized that the normalized illuminance decreases to approximately 0.2, and the temporal change significantly increases when 500 hours elapses.

According to the present invention, it is possible to obtain a sheet member capable of effectively suppressing a temporal change of the light emission intensity and to implement a backlight device, a light guide member, and a display device having a stable wavelength conversion characteristic using the sheet member according to the invention.

This application is based upon Japanese Patent Application No. 2016-223205, filed on November 16, 2016, the entire content of which is incorporated herein by reference.

## Claims

1. A quantum dot-containing member as a member obtained by dispersing quantum dots in resin, wherein a barrier layer is not provided on a surface of the member.

2. The quantum dot-containing member according to claim 1, wherein the resin contains the following general formula (1) and general formula (2): 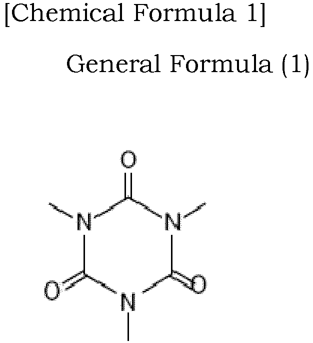 , and 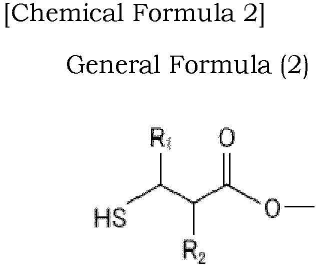 where "R₁" and "R₂" refer to H or CnHm (where "n" and "m" denote integers).

3. The quantum dot-containing member according to claim 2, wherein the resin contains at least one or more selected from the following general formula (3), general formula (4), general formula (5), and general formula (6): 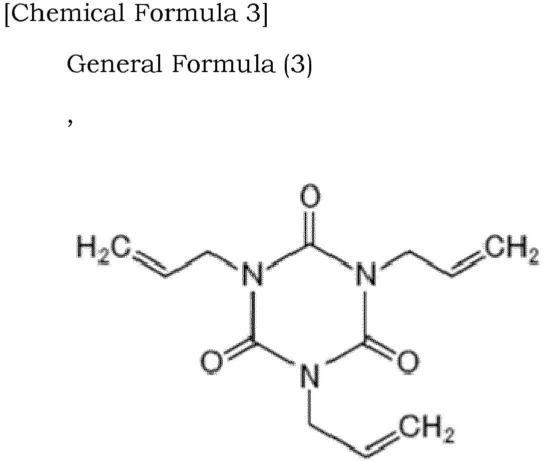 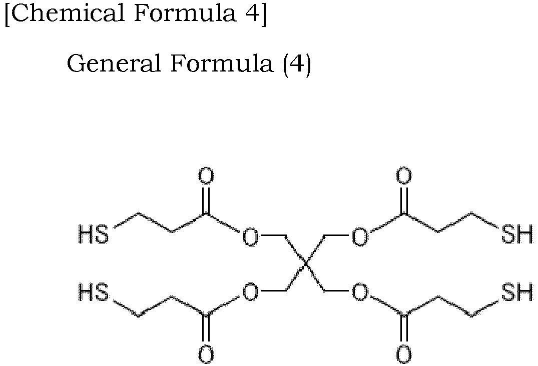 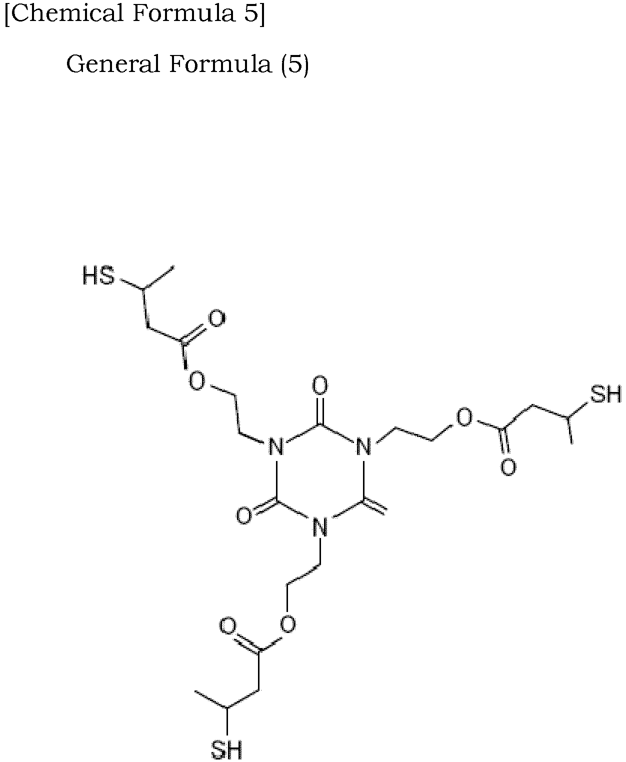 , and

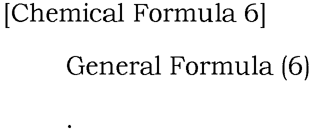

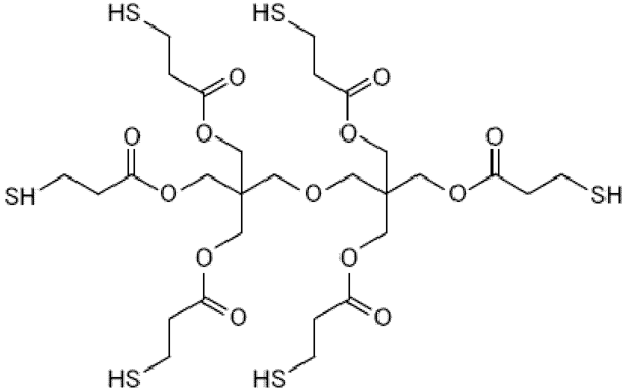

4. The quantum dot-containing member according to any one of claims 1 to 3, wherein the resin contains the following general formula (7) or general formula (8): 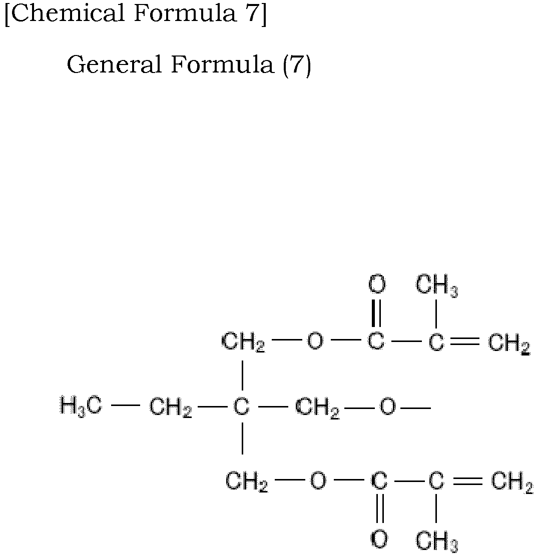 , or 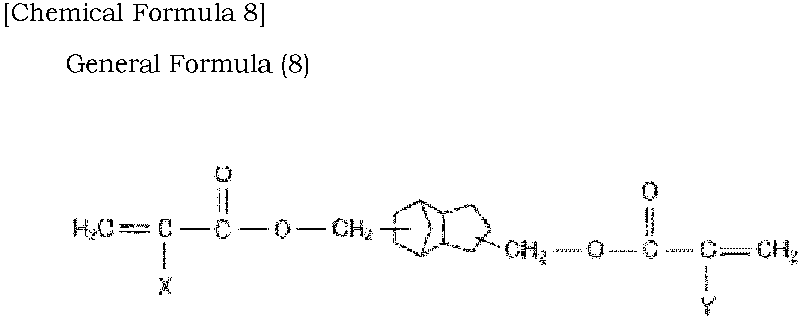 where "X" and "Y" refer to H or CₙHₘ (where "n" and "m" denote integers).

5. The quantum dot-containing member according to any one of claims 1 to 4, wherein a polymer constituting the resin has a high crosslink density.

6. The quantum dot-containing member according to any one of claims 1 to 5, wherein a normalized illuminance at 500 hours is 0.6 or higher.

7. The quantum dot-containing member according to any one of claims 1 to 6, wherein the barrier layer is not provided in any one of a light incidence side and a light emission side of the member.

8. A sheet member comprising the quantum dot-containing member according to any one of claims 1 to 7.

9. A backlight device comprising the quantum dot-containing member according to any one of claims 1 to 7 or the sheet member according to claim 8.

10. A display device comprising the quantum dot-containing member according to any one of claims 1 to 7 or the sheet member according to claim 8.
